# FASCICULE DE BREVET EUROPEEN

(11) **EP 2 464 889 B1**
(45) Date de publication et mention de la délivrance du brevet: **20.11.2019**
(21) Numéro de dépôt: 10737266.6
(22) Date de dépôt: 07.07.2010
(51) Int. Cl.: F16F 13/14

(54) **ARTICULATION HYDRO-ÉLASTIQUE**
HYDROELASTISCHE VERBINDUNG
HYDROELASTIC JOINT

(30) Priorité: 14.08.2009 FR 0955678
(43) Date de publication de la demande: 20.06.2012
(73) Titulaire: Anvis SD France SAS, 58302 Decize Cedex (FR)
(72) Inventeur: RENARD, Franck, F-58000 Saint Eloi (FR); CHARETTE, Christian, F-03400 Yzeure (FR)
(74) Mandataire: Schmid, Nils T.F.
(86) Numéro de dépôt international: PCT/EP2010/004153
(87) Numéro de publication internationale: WO 2011/018137

(56) Documents cités:
- DE-A1- 4 008 465
- FR-A1- 2 784 152
- GB-A- 2 010 438
- GB-A- 2 291 691
- JP-A- 8 166 040
- US-B1- 6 364 298

## Description

La présente invention concerne une articulation hydro-élastique pour assembler deux pièces de structure, en particulier pour connecter une suspension de roue à un châssis de véhicule, et pour amortir des vibrations transmises entre l'une et l'autre pièce de structure ; ladite articulation comprenant un axe longitudinal, une armature externe rigide, une armature interne rigide, un espace principal entre les armatures interne et externe, et une armature intermédiaire rigide disposée dans l'espace principal en le séparant dans un espace partiel interne et un espace partiel externe, un ensemble de ressort hydro-élastique étant disposé dans l'un des espaces partiels interne ou externe ; et un ensemble élastique ou hydro-élastique disposé dans l'autre espace partiel.

Ce type d'articulation a deux fonctions principales. D'un côté il sert à connecter une pièce à une autre pièce et d'un autre côté à atténuer la transmission de vibrations entre l'une et l'autre de ces pièces.

Dans le domaine de la construction des véhicules automobiles, ce type d'articulation est par exemple utilisé pour l'assemblage et l'amortissement des organes de liaison au sol, comme les essieux ou les triangles de suspension des trains de roues par rapport au châssis du véhicule. Les vibrations des organes de liaison au sol sont généralement caractérisées par des fréquences relativement basses, par exemple entre 10 et 20 Hz, et des amplitudes relativement faibles, par exemple de l'ordre de plus ou moins 0,2 mm.

Une telle articulation est connue par exemple de la demande internationale de brevet WO 03/033936 A1. Cette demande divulgue une articulation pour assembler deux pièces, ladite articulation comportant une armature externe et une armature interne ayant chacune un axe longitudinal, disposées l'un autour de l'autre, et un premier ensemble agissant en ressort hydro-élastique disposé entre lesdites armatures, ledit premier ensemble comportant un premier élément élastiquement déformable et un deuxième élément élastiquement déformable ayant une dimension longitudinale inférieure à une dimension correspondante du premier élément élastiquement déformable, de manière à limiter une déformation transversale dudit premier élément élastique déformable lors d'un basculement relatif des axes longitudinaux desdites armatures autour d'au moins un axe transversal de basculement.

FR 2 817 007 A1 divulgue un support en caoutchouc à amortissement hydraulique, comportant une partie intérieure, une partie extérieure agencée concentriquement ou excentriquement à distance de celle-ci, et un élément en caoutchouc interposé dans lequel est agencée au moins une chambre remplie de fluide amortisseur. A l'intérieure de la partie intérieure est agencée une partie tubulaire supplémentaire qui est pourvue d'un élément élastique pour former un support en caoutchouc.

FR 2 784 152 A divulgue un palier en caoutchouc à amortissement hydraulique, constitué par une partie intérierure, par une partie extérieure et par une pièce en caoutchouc intercalée dans laquelle est agencée au moins une chambre remplie de fluide d'amortissement.

GB 2 010 438 A se rapporte à un palier précontraint avec un élément élastique agencé entre une douille et une pièce intérieure.

L'objet de l'invention est de mettre à la disposition une articulation qui surmonte les inconvénients des articulations connues, en particulier qui représente une fonction de raideur asymétrique et qui est facilement adaptable après sa production. De plus, l'objet de l'articulation est de mettre à la disposition une articulation qui présente une raideur en direction radiale adaptée à l'utilisation dans un véhicule.

Pour cela, l'invention fournit une articulation hydro-élastique du type susmentionné, l'articulation comprenant un dispositif de butoir rigide disposé dans un des espaces partiels interne ou externe en ce que le dispositif de butoir évite sensiblement une déformation radiale de l'ensemble élastique ou hydro-élastique dans une direction de blocage et permet une déformation de l'ensemble élastique ou hydro-élastique dans une direction d'amortissement diamétralement opposée à la direction de blocage.

Typiquement, l'ensemble élastique ou hydro-élastique est déformé lors d'un déplacement relatif entre les deux armatures délimitant l'espace partiel de l'ensemble élastique ou hydro-élastique.

Dans un mode de réalisation, les armatures sont en forme cylindrique, en particulier en forme d'une douille ou d'un manchon. Par exemple les armatures sont formées d'un matériau rigide, par exemple d'un métal ou plastique. Typiquement des directions radiales et circonférentielle sont définies par rapport à l'axe longitudinal des armatures sensiblement cylindrique qui est l'axe de la symétrie de révolution des armatures. L'axe longitudinal correspond typiquement à la direction axiale des armatures.

Avec l'articulation selon l'invention le comportement élastique et/ou la raideur est facilement adaptable à l'utilisation. De plus, l'articulation est très raide dans une direction radiale, et une déformation radiale de l'ensemble élastique ou hydro-élastique est sensiblement évitée, en particulier dans une direction d'amortissement hydraulique de l'ensemble de ressort hydro-élastique. Le dispositif de butoir comprend un côté de butée libre qui bute contre une des armatures interne, externe ou intermédiaire ou n'est pas fixée à ladite armature pour permettre une déformation de l'ensemble élastique ou hydro-élastique dans la direction d'amortissement hydraulique.

Typiquement, le dispositif de butoir est formé d'un matériau ayant une raideur ou une rigidité supérieure au matériau de l'ensemble élastique ou hydro-élastique.

Dans un mode de réalisation, au moins une des armatures, en particulier toutes les armatures, est ou sont une douille, en particulier une douille cylindrique.

Dans un exemple d'un mode de réalisation, les armatures interne, externe, et intermédiaire sont sensiblement concentriques dans l'état détendu de l'articulation.

Par exemple, dans un mode de réalisation, l'ensemble élastique et/ou le dispositif de butoir est/sont disposé(s) dans l'espace partiel interne.

Par exemple, dans un mode de réalisation, le dispositif de butoir est en forme d'une colonne ayant un côté de butée et un côté de support, la colonne s'étendant radialement entre le côté de support et le côté de butée.

Dans un mode de réalisation, le dispositif de butoir comprend une partie de butée comprenant un côté de butée et une partie de pied.

Par exemple, dans un mode de réalisation, la partie de pied comprend un côté de fixation pour fixer le dispositif de butoir à une armature, en particulier à l'armature interne.

Dans un mode de réalisation, le côté de butée est radialement opposé au côté de fixation.

Par exemple, dans un mode de réalisation, le dispositif de butoir est accroché à une des armatures, en particulier une des armatures entre lesquelles l'ensemble élastique ou hydro-élastique est arrangé.

Dans un mode de réalisation typique, le dispositif de butoir est amovible. Typiquement, le dispositif de butoir est installé dans l'articulation sensiblement sans précontraindre l'ensemble élastique ou hydro-élastique dans un état détendu de l'articulation.

Avec l'articulation selon l'invention, dans un mode de réalisation, le dispositif de butoir est fixé à une des armatures, en particulier l'armature interne, par une fixation accrochante du type rainure/languette en direction radiale, en particulier en forme de queue d'aronde.

Dans un mode de réalisation, la fixation du type rainure/languette s'étend en direction axiale tout le long de l'armature à laquelle ledit dispositif de butoir est fixé.

Dans un mode de réalisation la partie de pied du dispositif de butoir forme la languette.

Par exemple, dans un mode de réalisation, la partie de pied du dispositif de butoir et une armature sont formées en une pièce. Dans un autre mode de réalisation le dispositif de butoir et ladite armature sont formées en une pièce.

Typiquement, le dispositif de butoir comprend une direction longitudinale étant disposée parallèlement à l'axe longitudinal de l'articulation.

Dans un mode de réalisation, l'armature dispose d'un plan d'amortissement hydraulique principal, la direction de blocage et la direction libre sont disposées dans le même plan radial, en particulier dans le plan d'amortissement hydraulique principal.

Dans un mode de réalisation, l'ensemble de ressort hydro-élastique comprend une première chambre hydraulique et une deuxième chambre hydraulique diamétralement opposée dans une direction dans le plan d'amortissement hydraulique principal étant axialement symétrique, les deux chambres hydrauliques étant respectivement symétriques par rapport au plan d'amortissement hydraulique principal et communiquant par un passage hydraulique de manière à engendrer un amortissement hydraulique desdites vibrations transmises entre lesdites deux armatures entre lesquelles l'ensemble de ressort hydro-élastique est disposé au moins selon ladite direction dans le plan d'amortissement hydraulique principal.

Par exemple, dans un mode de réalisation, le dispositif de butoir est arrangé dans la direction de blocage, et, en particulier, est symétrique par rapport au plan d'amortissement hydraulique principal.

Dans un mode de réalisation, le dispositif de butoir, en particulier la partie de butée, a une dimension radiale maximale supérieure à la dimension radiale de l'espace partiel interne ou externe dans lequel ledit dispositif de butoir est disposé, dans un état détendu de l'articulation. En particulier la dimension d'une partie du dispositif de butoir s'étendant en direction radiale au-delà du périmètre circulaire de l'armature à laquelle le dispositif de butoir est fixée, en particulier la partie de butée, correspond sensiblement à la dimension radiale de l'espace partiel interne ou externe dans lequel ledit dispositif de butoir est disposé, dans un état détendu de l'articulation.

Avec l'articulation selon l'invention, dans un mode de réalisation, le côté de butée du dispositif de butoir touche une armature dans un état détendu de l'articulation.

Dans un mode de réalisation, le côté de butée du dispositif de butoir est faiblement écarté de l'armature susceptible d'être butée par ledit dispositif dans un état détendu de l'articulation.

Par exemple, dans un mode de réalisation, la dimension radiale maximale du dispositif de butoir est positionnée en direction axiale sensiblement au milieu entre des extrémités de l'espace partiel externe ou interne.

Dans un mode de réalisation, la dimension radiale du dispositif de butoir diminue continuellement entre la position de la dimension radiale maximale et ses extrémités axiales.

Par exemple, dans un mode de réalisation, le dispositif de butoir à une surface de dimension radiale maximale au côté de butée, la surface ayant une longueur en direction axiale approximativement d'un quart à la moitié, en particulier d'un tiers, d'une longueur en direction axiale de l'armature à laquelle le dispositif de butoir est fixé.

Dans un mode de réalisation, le dispositif de butoir est formé d'un métal ou d'une matière plastique, en particulier ayant une raideur moins élevée que les armatures.

Typiquement, le dispositif de butoir est formé d'un matériau ayant une rigidité supérieure à un matériau élastique de l'ensemble élastique ou hydro-élastique. Par exemple, dans un mode de réalisation, le côté de butée est conforme à une surface de l'armature susceptible d'être touchée par le côté de butée, et le côté de butée s'étend en particulier circonférentiellement plus de 10 degrés et/ou typiquement moins de 90 degrés, par exemple entre environ 30 degrés et 60 degrés, en particulier autour de 50 degrés.

Dans un mode de réalisation, la partie de butée est enrobée par un matériau élastique.

Par exemple, dans un mode de réalisation, l'ensemble élastique ou hydro-élastique comprend un corps élastique, le corps élastique a une ou deux ou plusieurs cavité(s), dans une desquelles le dispositif de butoir est arrangé, la ou les cavité(s) ayant en particulier une largeur en direction circonférentielle d'environ 110 degrés à 150 degrés, en particulier autour de 120 degrés, et/ou étant symétrique au plan d'amortissement hydraulique principal.

Par exemple, un bossage peut être formé dans la cavité diamétralement opposée à la cavité où le dispositif de butoir est arrangé, s'étendant de l'armature de montage ou de l'armature opposée en direction radiale. Le bossage peu avoir une raideur moins élevée que le dispositif de butoir.

Préférablement, le dispositif de butoir rigide est disposé dans l'un des espaces partiels interne ou externe et est dimensionné par rapport à l'un des espaces partiels interne ou externe, particulièrement plus grand que l'un des espaces interne ou externe en ce que l'ensemble élastique ou hydro-élastique est pré-compressé particulièrement dans l'état détendu de l'articulation.

Dans le statut compressé de l'ensemble élastique ou hydro-élastique (40), les armatures interne, externe et intermédiaire sont disposées sensiblement concentriquement entre elles.

La description suivante permet d'apporter un certain nombre de précisions ou variantes aux principales caractéristiques expliquées ci-dessus, et de montrer quelques exemples de dispositifs répondant à la présente invention.
La figure 1 est une vue schématique isométrique selon un mode de réalisation d'une articulation hydro-élastique.
La figure 2 est une vue de coupe longitudinale selon la ligne A-A de la figure 3.
La figure 3 est une vue de coupe transversale selon la ligne B-B de la figure 2.
La figure 4 est une vue de coupe longitudinale selon la ligne C-C de la figure 2.
La figure 5 montre une courbe schématique de raideur d'un mode de réalisation d'une articulation selon l'invention.

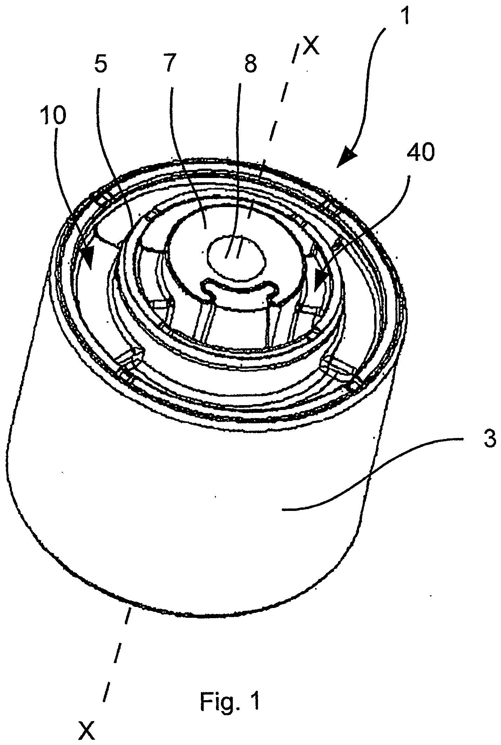

En référence aux figures 1 à 4, maintenant un mode de réalisation de l'articulation hydro-élastique selon l'invention est décrit.

Dans un mode de réalisation, montré dans la figure 1 dans une vue isométrique, l'articulation 1 est de forme sensiblement cylindrique et possède une douille ou un manchon externe 3, une douille ou manchon intermédiaire 5, et une douille ou un manchon interne 7, toutes les trois étant sensiblement cylindrique et coaxiales d'un axe longitudinal X. Ces douilles sont rigides et fabriqués par exemple en métal ou en plastique. Les douilles externes 3 et interne 7 sont destinées à être fixées respectivement à deux pièces d'une structure (non représentées) pour assembler ces pièces et amortir les transmissions de vibrations entre elles. Par exemple, une de ces deux pièces peut être fixée dans un perçage 8 formé dans la douille interne. Le perçage est sensiblement coaxial de l'axe longitudinal X.

Entre la douille externe 3 et intermédiaire 5 est monté un ensemble de ressort hydro-élastique 10, et entre la douille intermédiaire et la douille interne est disposé un ensemble élastique 40. Dans un mode de réalisation un ensemble hydro-élastique peut être arrangé entre la douille interne 7 et la douille intermédiaire 5.

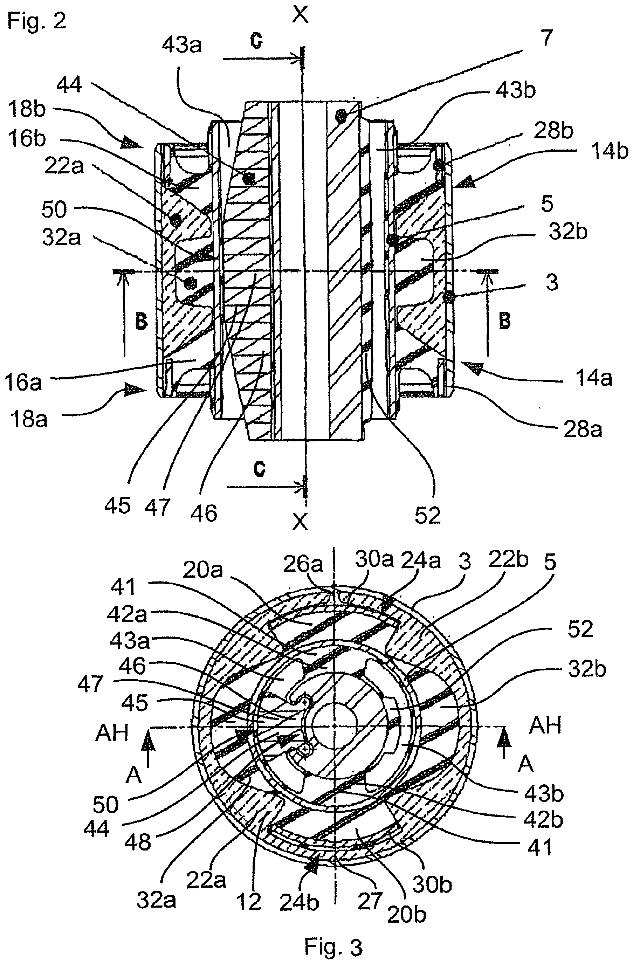

Dans la figure 3 qui montre une section de l'articulation on peut bien distinguer les douilles externes 3, intermédiaire 5 et interne 7, le perçage 8, l'ensemble de ressort hydro-élastique 10 et l'ensemble élastique 40. Dans un autre mode de réalisation, l'ensemble de ressort hydro-élastique 10 peut être arrangé entre les douilles interne et intermédiaire et l'ensemble élastique 40 peut être arrangé entre les douilles intermédiaire et externe.

Avec référence aux figures 2, 3 et 4 qui montre l'articulation dans différentes vues l'ensemble de ressort hydro-élastique 10 va être décrit en détail ci-dessous.

L'ensemble de ressort hydro-élastique 10 comprend un évidement 12 dans une partie centrale entre ses deux extrémités en direction axial des douilles externe et intermédiaire. Les douilles externe 3 et intermédiaire 5 forment des parois latérales de l'évidement 12. L'évidement 12 est fermé de manière étanche à chacune de ses extrémités 14a, 14b en direction axiale par une paroi annulaire 16a, 16b formée par une matière élastiquement déformable, par exemple un élastomère. Dans un mode de réalisation chaque paroi annulaire s'étend de la douille intermédiaire à la douille externe dans une direction oblique vers les extrémités et joignent l'extrémité 18a, 18b respective de la douille externe. Donc, les parois annulaires 16a, 16b forment chacun un tronc de cône avec la pointe dirigée vers le centre des douilles 3, 5.

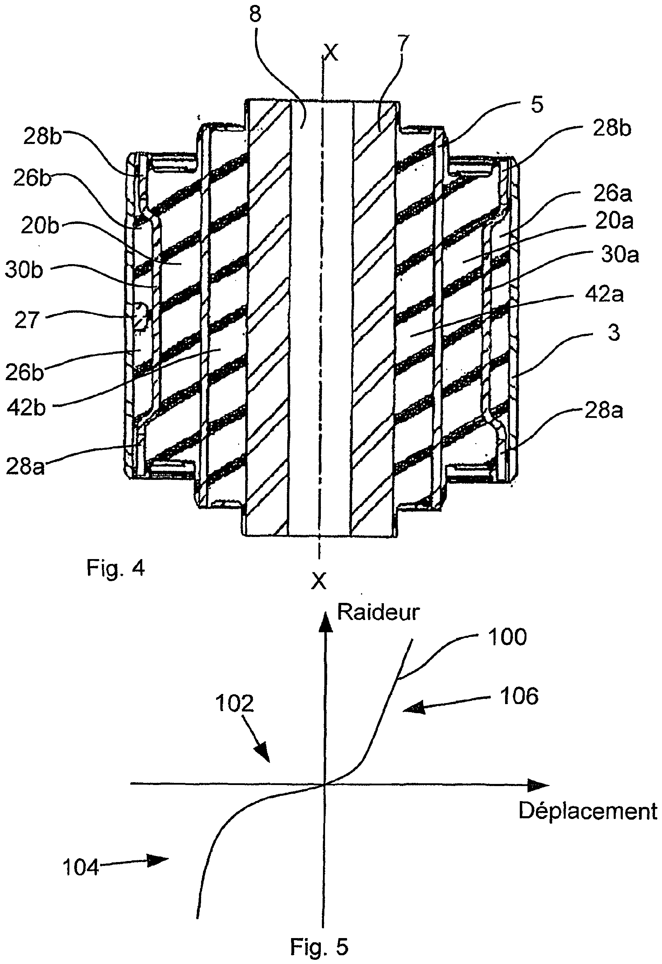

Deux saillies 20a, 20b formée d'un matériau élastique, par exemple d'un élastomère, s'étendent diamétralement opposés, dans le plan de la figure 4, dans une direction radiale de la douille intermédiaire et joignent la douille externe 3. L'évidement 12 est séparé par les deux saillies 20a, 20b en deux chambres hydrauliques 22a, 22b sensiblement semi-annulaire pour un liquide hydraulique. Les saillies 20a, 20b forment chacune une cloison de séparation séparant les deux chambres hydrauliques. Les saillies ou cloisons de séparation 20a, 20b s'étendent entre les deux parois annulaires 16a, 16b, et ont typiquement une largeur circonférentielle d'approximativement 40 à 80 degrés, en particulier environ 60 degrés, jusqu'à une épaule 24a, 24b en direction radiale, et sont formées d'un matériau élastique. L'épaule de chaque cloison de séparation est arrangée approximativement à trois quarts de la distance entre la douille intermédiaire et la douille externe. Chaque saillie 20a, 20b comprend, en outre, une section de séparation mince 26a, 26b qui s'étend entre l'épaule 24a, 24b et la douille externe 3 et qui a une étendue circonférentielle moins important que l'épaule. L'étendue circonférentielle correspond approximativement à la longueur radiale de la section de séparation mince. Les deux chambres 22a, 22b sont diamétralement opposées par rapport à l'axe longitudinal X selon une direction qui définit un plan d'amortissement hydraulique principal AH ou direction de fonctionnement principale. Le plan d'amortissement hydraulique principal est situé en particulier dans une direction radiale dans le plan de la figure 2 et sensiblement orthogonale aux cloisons de séparation. Lorsque la douille extérieure est déplacée dans une direction radiale dans le plan d'amortissement hydraulique principal AH par rapport à la douille intermédiaire, un volume d'une chambre hydraulique 22a parmi les deux chambres hydrauliques est diminuée et un volume de l'autre chambre hydraulique 22b est augmenté. Une des deux cloisons de séparation 20a, 20b, en particulier celle à la section de séparation mince 26b, est pourvue d'un passage de connexion 27 pour mettre à la disposition une communication entre les deux chambres 22a, 22b pour le fluide hydraulique et pour permettre un amortissement hydraulique dans une direction dans le plan d'amortissement hydraulique principal AH.

Une bague 28a, 28b est noyée dans la périphérie de chaque paroi annulaire 16a, 16b, les bagues ayant une forme cylindrique concentrique avec la douille externe. Les bagues 28a, 28b sont jointes par deux bandes 30a, 30b parallèles à l'axe X et noyées dans la périphérie de l'épaule 24a, 24b respective. Par exemple, une marche peut être arrangée entre une bague 28a, 28b et une bande 30a, 30b si la bande est disposé radialement intérieur ou extérieure à la bague 28a, 28b. Dans un mode de réalisation, les deux bandes 30a, 30b ont approximativement la même largeur que les épaules 24a, 24b. Les bagues 28a, 28b et les bandes 30a, 30b sont formées dans un mode de réalisation en une pièce, de préférence d'un matériau métallique ou plastique rigide. Par exemple les bagues 28a, 28b et les bandes 30a, 30b peuvent avoir la même raideur que les douilles interne, externe et intermédiaire. La largeur des épaules 24a, 24b et des bandes 30a, 30b permet d'ajuster la raideur de l'articulation 1 dans une direction radiale orthogonale à la direction de fonctionnement principal, alors dans une direction radiale dans le plan de la figure 4.

Dans un mode de réalisation, l'ensemble de ressort hydro-élastique comprend dans les chambres 22a, 22b deux bossages 32a, 32b axiaux diamétralement opposés par rapport à l'axe longitudinal de la douille intermédiaire. Les bossages s'étendent de la douille intermédiaire au milieu à l'endroit entre les saillies 20a, 20b vers l'extérieure, par exemple dans le plan de l'amortissement hydraulique principal AH. Dans un état détendu de l'articulation, les bossages 32a, 32b ne touchent pas la douille extérieure 3, et s'étendent approximativement trois quarts de la distance radiale entre l'articulation externe et l'articulation intermédiaire. Dans un autre mode de réalisation, les bossages peuvent s'étendre à partir de la douille externe vers la douille intermédiaire sans la toucher dans un état détendu de l'articulation. Les bossages 32a, 32b accroissent la raideur de l'articulation en direction d'amortissement hydraulique à partir d'un déplacement de la douille intermédiaire par rapport à la douille externe prédéterminé en direction radiale dans le plan de l'amortissement hydraulique principal AH. Les bossages 32a, 32b ont dans la direction de l'axe longitudinale X une dimension plus petite que la distance entre les parois annulaires 16a, 16b, par exemple approximativement la moitié de la distance minimale entre les parois annulaires 16a, 16b.

Avec référence aux figures 2, 3 et 4 l'ensemble élastique 40 va être décrit en détail ci-dessous.

L'ensemble élastique 40 comprend un corps élastique 41 dans lequel une première cavité 43a et une deuxième cavité 43b sont formées. Les deux cavités 43a, 43b sont séparée par deux membres élastiques 42a, 42b diamétralement opposés qui s'étendent radialement entre la douille intérieure 7 et la douille intermédiaire 5. Les deux membres élastiques 42a, 42b sont formés par exemple d'un élastomère. Dans un mode de réalisation, les deux membres élastiques sont arrangés dans le même plan radial que les saillies ou cloisons de séparation 20a, 20b de l'ensemble de ressort hydro-élastique, donc orthogonalement au plan d'amortissement hydraulique principal AH. Les membres élastiques s'étendent dans la direction de l'axe longitudinale X entre les deux extrémités axiales de la douille intermédiaire 3.

L'articulation comprend un butoir 44 formé pour éviter un déplacement de la douille intérieure par rapport à la douille intermédiaire dans une direction radiale en direction du plan de l'amortissement hydraulique principal AH. Le butoir 44 est arrangé dans la première cavité 43a. Le butoir 44 s'étend dans une direction axiale de la douille interne 7. Le butoir a une partie de pied 46 ayant un côté d'attachement et une partie de butée 45 ayant un côté de butée susceptible de buter contre la douille intermédiaire 5. Le butoir 44 est fixé ou accroché à la douille intérieure 7 par une fixation 46, 48 de type queue d'aronde, la partie de pied 46 ayant la forme d'une languette radiale et la douille intérieure 7 comprenant une rainure radiale 48 correspondante conforme à la languette radiale de la partie de pied 46 en forme de queue d'aronde. La languette et la rainure 48 s'étendent dans une direction axiale. Dans un autre mode de réalisation le butoir 44 peut être fixé à la douille intermédiaire 3. La fixation 46, 48 s'étend sensiblement tout le long de la douille interne 7. De cette manière le butoir 44 peut être glissé axialement dans la rainure 48 après le moulage des parties élastiques de l'articulation 1.

Dans un mode de réalisation la queue d'aronde a des bordures arrondies. Dans un autre mode de réalisation la douille interne peut être pourvue d'une nervure radiale, et le butoir peut être pourvu d'une rainure radiale.

Dans un état détendu de l'articulation 1, le butoir 44 fixé à la douille interne 7 touche la douille intermédiaire 5 limitant avec la douille interne 7 l'ensemble élastique 40. Dans une coupe longitudinale, alors en direction de l'axe longitudinale X de l'articulation, à voir dans la figure 2, le butoir dispose d'une dimension maximale en direction radiale où le côté de butée touche ou est proche de la douille intermédiaire 5. Le côté de butée comprend une surface de butée 50 ayant la dimension maximale radiale. La surface de butée a une longueur en direction axiale entre un quart et la moitié, de préférence environ un tiers, de la longueur axiale de la douille interne. Dans un mode de réalisation du butoir 44 la surface de butée est arrangée au milieu entre les extrémités de la douille 3. Typiquement le butoir 44 s'étend d'un côté de support, en particulier à la partie de pied 46, à la surface de butée 50 sous forme d'une colonne radiale 47.

La surface de butée 50 est adaptée à la douille intermédiaire. Si la surface de butée est en contact avec la douille intermédiaire, la surface de butée conforme une surface de la douille intermédiaire. En particulier, la surface de butée a une largeur circonférentielle entre environ 30 degrés et environ 60 degrés, en particulier autour de 50 degrés.

Le butoir 44 est formé d'un matériau rigide, en particulier d'un métal ou d'une matière plastique, en particulier ayant une raideur moins élevée que les douilles. Radialement opposé au butoir 44 par rapport à l'axe longitudinal de la douille interne un bossage 52 d'un matériau élastique s'étend de l'intérieur de l'articulation vers l'extérieure dans la direction d'amortissement hydraulique. Le bossage 52 a une dimension radiale correspondant approximativement à un tiers à la moitié de la distance entre la douille interne 7 et la douille intermédiaire 5. Le bossage 52 peut être une partie du corps élastique 41. Avec l'ensemble élastique 40 et le butoir 44 il est possible de permettre un mouvement de la douille interne par rapport de la douille intermédiaire dans une direction radiale définie, alors dans la direction radiale du bossage 52.

Dans un mode de réalisation la douille interne 7 dépasse longitudinalement la douille externe 3 et la douille intermédiaire 5 aux deux extrémités dans la direction de l'axe longitudinal. De cette manière l'articulation peut être montée facilement. En outre, la douille intermédiaire 5 dépasse longitudinalement la douille externe 3 aux deux extrémités dans la direction de l'axe longitudinal X.

Fig. 5 montre une courbe de raideur schématique 100 d'un mode de réalisation d'une articulation 1. L'axe horizontal est le déplacement de la douille externe 3 par rapport à la douille interne 7 dans une direction radiale dans le plan de l'amortissement hydraulique principal AH. La courbe dispose d'une zone de faible raideur 102 entre deux zones de raideur importante 104, 106 ayant une zone de raideur plus importante que la zone de faible raideur. Si le déplacement est zéro, l'articulation est dans un état de détente, alors le butoir 44 est en contact avec la douille intermédiaire 5 ou proche de cela mais n'exerce aucune force sur la douille intermédiaire. Si la douille interne est déplacée en direction du butoir (à droite dans la figure 5) par rapport à la douille externe, la raideur de l'articulation augmente lentement à cause de l'ensemble hydro-élastique et plus vite quand le déplacement et si important que le bossage 32b de l'ensemble de ressort hydro-élastique touche la douille externe 3 - voir la zone de déplacement 106 à droite de la zone de déplacement de faible raideur 102. Dans le cas d'un déplacement de la douille interne en direction opposée du butoir 44 par rapport à la douille externe (à gauche dans la figure 5), l'articulation traverse la zone de déplacement de faible raideur 102, jusqu'à la douille interne, où le bossage 52 bute contre la douille intermédiaire. Après le traversement de la zone de faible raideur, la raideur augmente car l'ensemble de ressort hydro-élastique dispose une raideur supérieure à la raideur de l'ensemble élastique en direction opposé du butoir.

### Liste de signes de référence

- 1: articulation
- 3: douille externe
- 5: douille intermédiaire
- 7: douille interne
- 10: ensemble de ressort hydro-élastique
- 12: évidement
- 14a, 14b: extrémité
- 16a, 16b: paroi annulaire
- 18a, 18b: extrémité
- 20a, 20b: cloison de séparation
- 22a, 22b: chambre hydraulique
- 24a, 24b: épaule
- 26a, 26b: section de séparation
- 27: passage de connexion
- 28a, 28b: bague
- 30a, 30b: bande
- 32a, 32b: bossage
- 40: ensemble élastique ou hydro-élastique
- 41: corps élastique
- 42a, 42b: membre élastique
- 43a: première cavité
- 43b: deuxième cavité
- 44: butoir
- 45: partie de butée
- 46: partie de pied
- 47: colonne
- 48: rainure radiale
- 50: surface de butée
- 52: bossage
- 100: courbe de raideur
- 102: zone de faible raideur
- 104: zone de raideur importante

- 106: zone de raideur importante
- X: axe longitudinale
- AH: plan de l'amortissement hydraulique principal

## Revendications

1. Articulation hydro-élastique (1) pour assembler deux pièces de structure, en particulier pour connecter une suspension de roue à un châssis de véhicule, et pour amortir des vibrations transmises entre l'une et l'autre pièce de structure ; ladite articulation comprenant un axe longitudinal (X), une armature externe rigide (3), une armature interne rigide (7), un espace principal entre les armatures interne et externe, et une armature intermédiaire rigide (5) disposée dans l'espace principal en le séparant dans un espace partiel interne et un espace partiel externe, un ensemble de ressort hydro-élastique (10) étant disposé dans l'un des espaces partiels interne ou externe ; et un ensemble élastique ou hydro-élastique (40) disposé dans l'autre espace partiel, et où un dispositif de butoir (44) rigide disposé dans un des espaces partiels interne ou externe et où le dispositif de butoir (44) évite sensiblement une déformation radiale de l'ensemble élastique ou hydro-élastique (40) dans une direction de blocage et permet une déformation de l'ensemble élastique ou hydro-élastique dans une direction d'amortissement diamétralement opposée à la direction de blocage et **caractérisée en ce qu'**un côté de butée du dispositif de butoir touche une armature dans un état détendu de l'articulation, et **en ce que** le dispositif de butoir est fixé à une des armatures par une fixation accrochante du type rainure/languette (46, 48) en direction radiale, en particulier en forme de queue d'aronde.

2. Articulation selon la revendication 1, **caractérisée en ce qu'**au moins une des armatures, en particulier toutes les armatures (3, 5, 7), est ou sont une douille, en particulier une douille cylindrique et/ou **en ce que** les armatures interne, externe, et intermédiaire sont sensiblement concentriques dans l'état détendu de l'articulation.

3. Articulation selon l'une des revendications précédentes, **caractérisée en ce que** l'ensemble élastique et/ou le dispositif de butoir est/sont disposé(s) dans l'espace partiel interne et/ou **en ce que** le dispositif de butoir (44) est en forme d'une colonne (47) ayant un côté de butée (50) et un côté de support (46), la colonne s'étendant principalement radialement et particulièrement dans une façon sensiblement rectiligne entre le côté de support et le côté de butée.

4. Articulation selon l'une des revendications précédentes, **caractérisée en ce que** le dispositif de butoir comprend une partie de butée (45) comprenant un côté de butée (50) et une partie de pied (46), particulièrement la partie de pied comprenant un côté de fixation pour fixer le dispositif de butoir à une armature, en particulier à l'armature interne (7), particulièrement le côté de butée étant radialement opposé au côté de fixation.

5. Articulation selon l'une des revendications précédentes, **caractérisée en ce que** le dispositif de butoir est accroché à une des armatures et/ou, la fixation du type rainure/languette (46, 48) s'étendant en direction axiale tout le long de l'armature à laquelle ledit dispositif de butoir est fixé.

6. Articulation selon l'une des revendications 1 à 4, **caractérisée en ce qu'** une partie de pied du dispositif de butoir et une armature sont formées en une pièce.

7. Articulation selon l'une des revendications précédentes, **caractérisée en ce que** le dispositif de butoir (44) a une direction longitudinale parallèle à l'axe longitudinal (X) de l'articulation.

8. Articulation selon l'une des revendications précédentes, **caractérisée en ce que** l'armature dispose d'un plan d'amortissement hydraulique principal (AH), la direction de blocage et la direction libre sont disposées dans le même plan radial, en particulier dans le plan d'amortissement hydraulique principal (AH), et/ou **en ce que** le dispositif de butoir est arrangé dans la direction de blocage, et, en particulier, est symétrique par rapport au plan d'amortissement hydraulique principal (AH), et/ou **en ce que** le dispositif de butoir a une dimension radiale maximale supérieure à la dimension radiale de l'espace partiel interne ou externe dans lequel ledit dispositif de butoir est disposé, dans un état détendu de l'articulation.

9. Articulation selon l'une des revendications 7 à 8, **caractérisée en ce que** la dimension radiale du dispositif de butoir diminue continuellement entre la position de la dimension radiale maximale et ses extrémités axiales, et/ou **en ce que** le dispositif de butoir a une surface (50) de dimension radiale maximale au côté de butée, la surface ayant une longueur en direction axiale approximativement d'un quart à la moitié, en particulier d'un tiers, d'une longueur en direction axiale de l'armature à laquelle le dispositif de butoir est fixé.

10. Articulation selon une des revendications précédentes, **caractérisée en ce que** le dispositif de butoir est formé d'un métal ou d'une matière plastique, en particulier ayant une raideur moins élevée que les armatures, et/ou **en ce que** le dispositif de butoir est formé d'un matériau ayant une raideur supérieure à un matériau élastique de l'ensemble élastique ou hydro-élastique.

11. Articulation selon une des revendications précédentes, **caractérisée en ce que** le côté de butée (50) est conforme à une surface de l'armature susceptible d'être touchée par le côté de butée, et le côté de butée s'étend en particulier circonférentiellement plus de 10 degrés et/ou typiquement moins de 90 degrés, par exemple entre environ 30 degrés et 60 degrés, en particulier autour de 50 degrés.

12. Articulation selon une des revendications 4 à 11, **caractérisée en ce que** la partie de butée est enrobée par un matériau élastique.

13. Articulation selon l'une des revendications précédentes, **caractérisée en ce que** l'ensemble élastique ou hydro-élastique comprend un corps élastique, le corps élastique a une ou deux cavité(s) (43a, 43b), dans une desquelles le dispositif de butoir est arrangé, la ou les cavité(s) ayant en particulier une largeur en direction circonférentielle d'environ 110 degrés à 150 degrés, en particulier autour de 120 degrés, et/ou étant symétrique au plan d'amortissement hydraulique principal (AH), particulièrement dans le statut compressé de l'ensemble élastique ou hydro-élastique (40), les armatures interne, externe et intermédiaire étant disposées sensiblement concentriquement entre elles.

14. Articulation selon l'une des revendications précédentes, **caractérisée en ce que** le dispositif de butoir (44) rigide est disposé dans l'un des espaces partiels interne ou externe et est dimensionné par rapport à l'un des espaces partiels interne ou externe, particulièrement plus grand que l'un des espaces interne ou externe **en ce que** l'ensemble élastique ou hydro-élastique (40) est pré-compressé particulièrement dans l'état détendu de l'articulation.

## Patentansprüche

1. Hydroelastische Anlenkung (1) zum Zusammenbauen zweier Strukturteile, insbesondere um eine Radaufhängung mit einem Fahrzeugchassis zu verbinden, und um Schwingungen zu dämpfen, die zwischen dem einen und dem anderen Strukturteil übertragen werden; wobei die Anlenkung eine Längsachse (X), eine starre äußere Bewehrung (3), eine starre innere Bewehrung (7), einen Hauptraum zwischen der inneren und äußeren Bewehrung und eine starre Zwischenbewehrung (5), die in dem Hauptraum angeordnet ist, indem er in einen inneren Teilraum und einen äußeren Teilraum getrennt wird, umfasst, wobei eine hydroelastische Federeinheit (10) in einem des inneren oder äußeren Teilraums angeordnet ist; und eine elastische oder hydroelastische Einheit (40), die in dem anderen Teilraum angeordnet ist, und wobei eine starre Anschlagvorrichtung (44), die in einem des inneren oder äußeren Teilraums angeordnet ist und die Anschlagvorrichtung (44) im Wesentlichen eine radiale Verformung der elastischen oder hydroelastischen Einheit (40) in eine Blockierungsrichtung verhindert und eine Verformung der elastischen oder hydroelastischen Einheit in eine Dämpfungsrichtung, die der Blockierungsvorrichtung diametral entgegengesetzt ist, erlaubt, und **dadurch gekennzeichnet, dass** eine Anschlagseite der Anschlagvorrichtung eine Bewehrung in einem entspannten Zustand der Anlenkung berührt, und dass die Anschlagvorrichtung an einer der Bewehrungen durch eine anhängende Befestigung vom Typ Nut- und Federverbindung (46, 48) in radiale Richtung, insbesondere in Form eines Schwalbenschwanzes, befestigt ist.

2. Anlenkung nach Anspruch 1, **dadurch gekennzeichnet, dass** mindestens eine der Bewehrungen, insbesondere alle Bewehrungen (3, 5, 7) eine Hülse ist (sind), insbesondere eine zylindrische Hülse, und/oder dass die innere, äußere und Zwischenbewehrung in dem entspannten Zustand der Anlenkung im Wesentlichen konzentrisch sind.

3. Anlenkung nach einem der vorstehenden Ansprüche, **dadurch gekennzeichnet, dass** die elastische Einheit und/oder die Anschlagvorrichtung in dem inneren Teilraum angeordnet ist (sind), und/oder dass die Anschlagvorrichtung (44) die Form einer Säule (47) aufweist, die eine Anschlagseite (50) und eine Stützseite (46) aufweist, wobei sich die Säule in der Hauptsache radial und insbesondere auf eine im Wesentlichen geradlinige Art zwischen der Stützseite und der Anschlagseite erstreckt.

4. Anlenkung nach einem der vorstehenden Ansprüche, **dadurch gekennzeichnet, dass** die Anschlagvorrichtung einen Anschlagteil (45) umfasst, der eine Anschlagseite (50) und einen Fußteil (46) umfasst, wobei der Fußteil insbesondere eine Befestigungsseite umfasst, um die Anschlagvorrichtung an einer Bewehrung zu befestigen, insbesondere an der inneren Bewehrung (7), wobei insbesondere die Anschlagseite der Befestigungsseite radial gegenüberliegt.

5. Anlenkung nach einem der vorstehenden Ansprüche, **dadurch gekennzeichnet, dass** die Anschlagvorrichtung an einer der Bewehrungen angehängt ist, und/oder dass sich die Befestigung des Typs Nute und Feder (46, 48) in axiale Richtung entlang der gesamten Bewehrung erstreckt, an der die Anschlagvorrichtung befestigt ist.

6. Anlenkung nach einem der Ansprüche 1 bis 4, **dadurch gekennzeichnet, dass** ein Fußteil der Anschlagvorrichtung und eine Bewehrung aus einem Stück gebildet sind.

7. Anlenkung nach einem der vorstehenden Ansprüche, **dadurch gekennzeichnet, dass** die Anschlagvorrichtung (44) eine Längsrichtung parallel zu der Längsachse (X) der Anlenkung aufweist.

8. Anlenkung nach einem der vorstehenden Ansprüche, **dadurch gekennzeichnet, dass** die Bewehrung über eine hydraulische Hauptdämpfungsebene (AH) verfügt, wobei die Blockierungsrichtung und die freie Richtung in derselben radialen Ebene angeordnet sind, insbesondere in der hydraulischen Hauptdämpfungsebene (AH), und/oder dass die Anschlagvorrichtung in die Blockierungsrichtung eingerichtet ist und insbesondere bezüglich der hydraulischen Hauptdämpfungsebene (AH) symmetrisch ist, und/oder dass die Anschlagvorrichtung ein maximales radiales Maß aufweist, das in einem entspannten Zustand der Anlenkung größer ist als das radiale Maß des inneren oder äußeren Teilraums, in dem die Anschlagvorrichtung angeordnet ist.

9. Anlenkung nach einem der Ansprüche 7 bis 8, **dadurch gekennzeichnet, dass** das radiale Maß der Anschlagvorrichtung kontinuierlich zwischen der Position des maximalen radialen Maßes und ihren axialen Enden abnimmt, und/oder dass die Anschlagvorrichtung eine Oberfläche (50) mit einem maximalen radialen Maß auf der Seite des Anschlags aufweist, wobei die Oberfläche eine Länge in axiale Richtung von in etwa einem Viertel bis zur Hälfte, insbesondere eines Drittels einer Länge in axiale Richtung der Bewehrung, an der die Anschlagvorrichtung befestigt ist, aufweist.

10. Anlenkung nach einem der vorstehenden Ansprüche, **dadurch gekennzeichnet, dass** die Anschlagvorrichtung aus einem Metall oder einem Kunststoff gebildet ist, das/der eine Steifigkeit aufweist, die geringer ist als die der Bewehrungen, und/oder dass die Anschlagvorrichtung aus einem Werkstoff hergestellt ist, der eine Steifigkeit aufweist, die größer ist als ein elastischer Werkstoff der elastischen oder hydroelastischen Einheit.

11. Anlenkung nach einem der vorstehenden Ansprüche, **dadurch gekennzeichnet, dass** die Anschlagseite (50) zu einer Oberfläche der Bewehrung, die von der Anschlagseite berührt werden kann, formangeglichen ist, und dass sich die Anschlagseite insbesondere umfänglich um mehr als 10 Grad und/oder typischerweise weniger als 90 Grad, zum Beispiel etwa 30 Grad und 60 Grad, insbesondere um 50 Grad erstreckt.

12. Anlenkung nach einem der Ansprüche 4 bis 11, **dadurch gekennzeichnet, dass** der Anschlagteil mit einem elastischen Werkstoff beschichtet ist.

13. Anlenkung nach einem der vorstehenden Ansprüche, **dadurch gekennzeichnet, dass** die elastische oder hydroelastischen Einheit einen elastischen Körper umfasst, wobei der elastische Körper einen oder zwei Hohlräume (43a, 43b) aufweist, in einem von welchen die Anschlagvorrichtung eingerichtet ist, wobei der Hohlraum oder die Hohlräume insbesondere eine Breite in Umfangsrichtung von etwa 110 Grad bis 150 Grad, insbesondere um 120 Grad aufweisen und/oder zu der hydraulischen Hauptdämpfungsebene (AH) symmetrisch sind, insbesondere in dem komprimierten Zustand der elastischen oder hydroelastischen Einheit (40), wobei die innere, äußere und Zwischenbewehrung im Wesentlichen zueinander konzentrisch angeordnet sind.

14. Anlenkung nach einem der vorstehenden Ansprüche, **dadurch gekennzeichnet, dass** die starre Anschlagvorrichtung (44) in einem des inneren oder äußeren Teilraums angeordnet und bezüglich eines des inneren oder äußeren Teilraums bemessen ist, insbesondere größer als einer des inneren oder äußeren Raums ist, dass die elastische oder hydroelastische Einheit (40) vorkomprimiert ist, insbesondere in dem entspannten Zustand der Anlenkung.

## Claims

1. A hydro-elastic articulation (1) for assembling two structural parts, in particular for connecting a wheel suspension to a vehicle chassis, and for damping vibrations transmitted between both structural parts; said articulation comprising a longitudinal axis (X), a rigid outer framework (3), a rigid inner framework (7), a main space between the inner and outer frameworks, and a rigid intermediate framework (5) disposed in the main space separating it in an inner partial space and an outer partial space, a hydro-elastic spring assembly (10) being disposed in one of the inner or outer partial spaces; and an elastic or hydro-elastic assembly (40) disposed in the other partial space, and wherein a rigid abutment device (44) disposed in one of the inner or outer partial spaces and wherein the abutment device (44) substantially avoids radial deformation of the elastic or hydro-elastic assembly (40) in a locking direction and allows deformation of the elastic or hydro-elastic assembly in a damping direction diametrically opposed to the locking direction and **characterized in that** an abutment side of the abutment device touches a framework in an articulation relaxed state, and **in that** the abutment device is secured to one of the frameworks by a tongue-and-groove type holding fixture (46, 48) in radial direction, in particular in the form of a dovetail.

2. The articulation according to claim 1, **characterized in that** at least one of the frameworks, in particular all the frameworks (3, 5, 7), is or are a socket, in particular a cylindrical socket and/or the outer, inner and intermediate frameworks are substantially concentric in the articulation relaxed state.

3. The articulation according to any one of the preceding claims, **characterized in that** the elastic assembly and/or the abutment device is/are disposed in the inner partial space and/or **in that** the abutment device (44) is in the form of a column (47) having an abutment side (50) and a support side (46), the column extending mainly radially and in particular in a substantially rectilinear manner between the support side and the abutment side.

4. The articulation according to any one of the preceding claims, **characterized in that** the abutment device comprises an abutment portion (45) comprising an abutment side (50) and a foot portion (46), in particular the foot portion comprising a securing side for securing the abutment device to a framework, in particular to the inner framework (7), in particular the abutment side being radially opposed to the securing side.

5. The articulation according to any one of the preceding claims, **characterized in that** the abutment device is hooked to one of the frameworks and/or the tongue-and-groove type holding fixture (46, 48) extending in an axial direction along the framework to which said abutment device is secured.

6. The articulation according to any one of claims 1-4, **characterized in that** a foot portion of the abutment device and a framework are formed in one piece.

7. The articulation according to any one of the preceding claims, **characterized in that** the abutment device (44) has a longitudinal direction parallel to the longitudinal axis (X) of the articulation.

8. The articulation according to any one of the preceding claims, **characterized in that** the framework has a main hydraulic damping plane (AH), the locking direction and the free direction are arranged in the same radial plane, in particular in the main hydraulic damping plane (AH), and/or **in that** the abutment device is arranged in the locking direction, and, in particular, is symmetrical with respect to the main hydraulic damping plane (AH), and/or **in that** the abutment device has a maximum radial dimension greater than the radial dimension of the inner or outer partial space in which said abutment device is disposed, in an articulation relaxed state.

9. The articulation according to any one of claims 7-8, **characterized in that** the radial dimension of the abutment device continuously decreases between the maximum radial dimension position and its axial ends, and/or **in that** the abutment device has a surface (50) of maximum radial dimension at the abutment side, the surface having a length in the axial direction of approximately one-quarter to one-half, in particular one-third, of a length in the axial direction of the framework to which the abutment device is secured.

10. The articulation according to any one of the preceding claims, **characterized in that** the abutment device is formed of a metal or a plastic material, in particular having lower stiffness than the frameworks, and/or **in that** the abutment device is formed of a material having a stiffness greater than an elastic material of the elastic or hydro-elastic assembly.

11. The articulation according to any one of the preceding claims, **characterized in that** the abutment side (50) is in accordance with a framework surface that can be touched by the abutment side, and the abutment side extends in particular circumferentially more than 10 degrees and/or typically less than 90 degrees, for example between 30 degrees and 60 degrees, especially about 50 degrees.

12. The articulation according to any one of claims 4-11, **characterized in that** the abutment portion is coated with an elastic material.

13. The articulation according to any one of the preceding claims, **characterized in that** the elastic or hydro-elastic assembly comprises an elastic body, the elastic body has one or two cavities (43a, 43b), the abutment device being arranged in one of them, the one or two cavities having in particular a width in the circumferential direction of about 110 degrees to 150 degrees, in particular about 120 degrees, and/or being symmetrical to the main hydraulic damping plane (AH), in particular in the compressed state of the elastic or hydro-elastic assembly (40), the inner, outer and intermediate frameworks being arranged substantially concentrically between them.

14. The articulation according to any one of the preceding claims, **characterized in that** the rigid abutment device (44) is disposed in one of the inner or outer partial spaces and is dimensioned with respect to one of the inner or outer partial spaces, in particular larger than one of the inner or outer spaces **in that** the elastic or hydro-elastic assembly (40) is pre-compressed in particular in the articulation relaxed state.
